# EUROPÄISCHE PATENTSCHRIFT

(11) **EP 3 011 701 B1**
(45) Veröffentlichungstag und Bekanntmachung des Hinweises auf die Patenterteilung: **28.06.2017**
(21) Anmeldenummer: 13750311.6
(22) Anmeldetag: 13.08.2013
(51) Int. Cl.: H04L 12/24

(54) **VERFAHREN UND SYSTEM ZUR PLANUNG EINES KOMMUNIKATIONSNETZES EINES INDUSTRIELLEN AUTOMATISIERUNGSSYSTEMS**
METHOD AND SYSTEM FOR PLANNING A COMMUNICATION NETWORK OF AN INDUSTRIAL AUTOMATION SYSTEM
PROCÉDÉ ET SYSTÈME D'ÉLABORATION D'UN RÉSEAU DE COMMUNICATION D'UN SYSTÈME INDUSTRIEL D'AUTOMATISATION

(43) Veröffentlichungstag der Anmeldung: 27.04.2016
(73) Patentinhaber: Siemens Aktiengesellschaft, 80333 München (DE)
(72) Erfinder: GROSCH, Thomas, 90574 Roßtal (DE)
(86) Internationale Anmeldenummer: PCT/EP2013/066916
(87) Internationale Veröffentlichungsnummer: WO 2015/022019

(56) Entgegenhaltungen:
- EP-A2- 1 533 941
- US-A1- 2002 091 506
- US-B1- 8 037 163
- TAKAYUKI AKANOMA ET AL: "Path configuration using probability distribution of delay for high-functional node network", CONSUMER COMMUNICATIONS AND NETWORKING CONFERENCE (CCNC), 2011 IEEE, IEEE, 9. Januar 2011 (2011-01-09), Seiten 231-233, XP031865909, DOI: 10.1109/CCNC.2011.5766461 ISBN: 978-1-4244-8789-9

## Beschreibung

Üblicherweise umfaßt ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozeßautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 0 460 843 A2 ist eine rechnergestützte Netzplanungseinrichtung bekannt, das eine zur Darstellung eines Kommunikationsnetzes mit einer Vielzahl von Knoten vorgesehene Anzeigeeinrichtung aufweist. Jedem der Knoten ist eine Vielzahl von untergeordneten Knoten zugeordnet, wobei die untergeordneten Knoten eine vorbestimmte Verkehrsbeziehung zu dem zugeordneten Knoten und zu zumindest einem weiteren Knoten aufweisen. Auf eine Benutzereingabe werden einem ausgewählten Knoten zugeordnete untergeordnete Knoten ermittelt. Außerdem wird ermittelt, welche der untergeordneten Knoten eine intensivere Verkehrsbeziehung zu dem zumindest einen weiteren Knoten als zu dem ausgewählten Knoten aufweisen, um gegebenenfalls eine Zuordnungsänderung vorzunehmen.

EP 1 098 474 A1 betrifft ein Kommunikationsnetz-Modellierungssystem, das ein Netzinformationsmodell umfaßt und eine Funktionen- sowie eine Geräte-Datenbasis sowohl erzeugt als auch verwaltet. Die Funktionen- und die Geräte-Datenbasis sind miteinander verknüpft und dienen zur Erzeugung eines Wege und Verbindungen umfassenden Netzmodells. Eine Steuerungseinrichtung steht in Wechselwirkung mit einem oder mehreren Systemmodulen, die das Netzinformationsmodell für spezielle Funktionen nutzen, beispielsweise Netzplanung.

In EP 1398905 A1 ist ein Kommunikationsnetzplanungssystem beschrieben, bei dem an einer graphischen Benutzerschnittstelle eine Übersicht über Teilnetze innerhalb eines Kommunikationsnetzes bereitgestellt wird. Außerdem wird ein Selektor zur Auswahl einer graphischen Darstellung eines Teilnetzes bereitgestellt, die eine hierarchisch gegliederte Wiedergabe von im jeweiligen Teilnetz vorhandenen Knotenarten und eine Wiedergabe von zwischen diesen Knotenarten bestehenden Verknüpfungen umfaßt. Des weiteren wird ein Selektor zur Auswahl einer kombinierten graphischen Darstellung jeweils eines Ausschnittes von miteinander verbundenen Teilnetzen im Bereich eines Teilnetzübergangs bereitgestellt, die eine hierarchisch gegliederte Wiedergabe von im jeweiligen Teilnetzübergangsbereich vorhandenen Knotenarten und eine Wiedergabe von zwischen diesen Knotenarten bestehenden Verbindungen umfaßt. Eine Steuerungseinheit ist zur Ansteuerung der graphischen Benutzerschnittstelle entsprechend von einer Eingabeeinheit empfangenen Selektionseingaben vorgesehen.

Aus EP 1 624 614 A1 ist ein Verfahren zur automatischen Planung von Netzkonfigurationen bekannt, bei dem mindestens ein beschriebenes Netz-Planungsproblem mittels Partitions-Verfahren in Teilprobleme zerlegt wird. Dabei wird das Netz-Planungsproblem durch ein Modell bestehend aus Knoten und Kommunikationsbeziehungen beschrieben. Durch die Zerlegung werden Knoten zu autonomen Gruppen zusammengefaßt, die jeweils ein Teilproblem darstellen. Außerdem wird jeweils mindestens eine Lösung für die Teilprobleme auf Basis vorgebbarer, auf Attribute der Knoten anwendbarer Regeln mittels einer heuristischen Suche generiert. Dabei sind die Attribute grafenbezogenen Problembeschreibungen von Bereichen des Automatisierungssystems. Mittels eines Akzeptanztests erfolgt eine Überprüfung der generierten Lösungen für die Teilprobleme. Die US-Patent Veröffentlichung US8037163 B1 offenbart ein Verfahren zur Analyse der Verfügbarkeit von Teilen eines Netzwerkes, wobei durch Betrachtung von zwei Szenarien eine gesamte Netzwerkverfügbarkeit bestimmt wird. Der vorliegenden Erfindung liegt die Aufgabe zugrunde, ein Verfahren zur Planung eines Kommunikationsnetzes eines industriellen Automatisierungssystems anzugeben, das eine für eine Kommunikation zwischen Leitsystem- und Steuerungsgeräteebene hinreichende Deterministik gewährleistet, sowie eine Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 5 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Planung eines Kommunikationsnetzes eines industriellen Automatisierungssystems wird das Kommunikationsnetz hinsichtlich einer wahrscheinlichen Übermittlungsdauer von Nachrichten innerhalb des Kommunikationsnetzes stochastisch modelliert. Das Kommunikationsnetz kann beispielsweise eine Leitsystemebene mit einer Steuerungsgeräteebene verbinden. Vorzugsweise wird das Kommunikationsnetz vorzugsweise nicht-zyklisch betrieben. Anhand des stochastischen Kommunikationsnetzmodells wird eine Verfügbarkeit des Kommunikationsnetzes überprüft. Bei Unterschreitung einer vorgebbaren Mindest-Verfügbarkeit wird anhand des stochastischen Kommunikationsnetzmodells die Verfügbarkeit des Kommunikationsnetzes unter Verwendung erster zusätzlicher bzw. alternativer Netzkomponenten iterativ ermittelt. Zu Netzkomponenten können beispielsweise auch Leitungsverbindungen zählen.

Bei Unterschreitung der vorgebbaren Mindest-Verfügbarkeit trotz Verwendung der zusätzlichen bzw. alternativen Netzkomponenten wird die Verfügbarkeit des Kommunikationsnetzes unter Verwendung zweiter oder weiterer zusätzlicher und/oder alternativer Netzkomponenten entsprechend dem erfindungsgemäßen Verfahren erneut ermittelt. Bei Einhaltung der vorgebbaren Mindest-Verfügbarkeit wird eine überprüfte Netzkonfiguration für einen Betrieb freigegeben.

Das erfindungsgemäße Verfahren bietet als Vorteil, daß aufgrund eines quantifizierbaren Verhalten eines Kommunikationsnetzes eines industriellen Automatisierungssystems eine gesicherte Verfügbarkeit des Kommunikationsnetzes erzielt werden kann, ohne daß spezielle Kommunikationsprotokolle, wie Feldbus-Kommunikationsprotokolle, erforderlich sind. Beispielsweise kann das Kommunikationsnetz Ethernet-basiert sein. Darüber hinaus kann eine Nachrichtenübermittlung innerhalb des Kommunikationsnetzes entsprechend TCP/IP-Kommunikationsprotokoll erfolgen.

Entsprechend einer bevorzugten Ausgestaltung der vorliegenden Erfindung bildet das Kommunikationsnetzmodell Netzkomponenten hinsichtlich ihrer Ausfallrate und Kommunikationsverbindungen hinsichtlich einer Wahrscheinlichkeit einer erfolgreichen Nachrichtenübermittlung innerhalb einer vorgebbaren Reaktionszeit ab. Auf diese Weise können verschiedene Verfügbarkeitsmodelle in einem Gesamtmodell vereint werden.

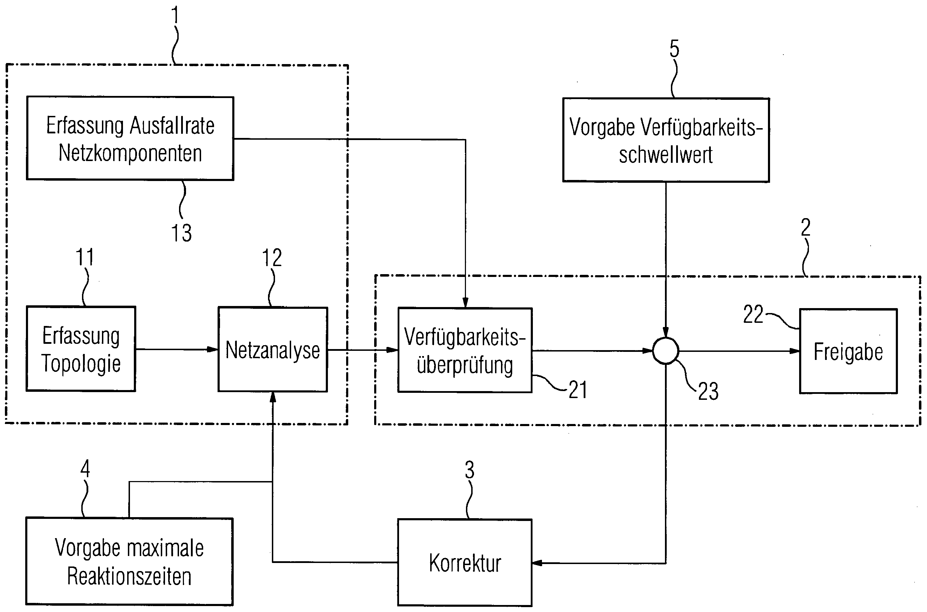

Das erfindungsgemäße System zur Planung eines Kommunikationsnetzes eines industriellen Automatisierungssystems umfaßt Einheiten gemäß den Merkmalen des unabhängigen Anspruchs 5. Die vorliegende Erfindung wird nachfolgend an einem Ausführungsbeispiel anhand der Zeichnung näher erläutert. Es zeigt die
- Figur: ein Blockschaltbild eines Systems zur Planung eines Kommunikationsnetzes eines industriellen Automatisierungssystems.

Das in der Figur dargestellte System zur Planung eines Kommunikationsnetzes eines industriellen Automatisierungssystems umfaßt eine Modellierungseinheit 1 zur stochastischen Modellierung des Kommunikationsnetzes hinsichtlich einer wahrscheinlichen Übermittlungsdauer von Nachrichten innerhalb des Kommunikationsnetzes. Hierzu umfaßt die Modellierungseinheit 1 eine Komponente 11 zur Erfassung einer Netztopologie bzw. zum virtuellen Aufbauen eines industriellen Automatisierungssystems sowie eine Komponente 12 zur Durchführung einer Netzanalyse. Die Komponente 12 zur Durchführung der Netzanalyse ist mit einer Einheit 4 zur Vorgabe geforderter maximaler Reaktionszeiten für eine erfolgreiche Nachrichtenübermittlung innerhalb des Kommunikationsnetzes verbunden. Aus einem resultierenden stochastischen Kommunikationsnetzmodell ist damit eine zu erwartende Ausfallrate des Kommunikationsnetzes durch eine Durchführung der Netzanalyse ableitbar. Die Modellierungseinheit 1 umfaßt außerdem eine Komponente 13 zur Erfassung von Ausfallraten von Netzkomponenten des Kommunikationsnetzes. Das Kommunikationsnetzmodell bildet damit nicht nur Kommunikationsverbindungen hinsichtlich einer Wahrscheinlichkeit einer erfolgreichen Nachrichtenübermittlung innerhalb einer vorgebbaren Reaktionszeit ab, sondern auch Netzkomponenten hinsichtlich ihrer Ausfallrate.

Darüber hinaus weist das in der Figur dargestellte System eine Prüfeinheit 2 auf, die eine Komponente 21 zur Überprüfung einer Verfügbarkeit des Kommunikationsnetzes anhand des stochastischen Kommunikationsnetzmodells. Dieser Komponente 21 werden Ergebnisse der Netzanalyse und erfaßte Ausfallraten der Netzkomponenten zugeführt. Ausgangsseitig ist die Komponente 21 zur Verfügbarkeitsüberprüfung über einen Vergleicher 23 mit einer Einheit 5 zur Vorgabe eines Schwellwerts für eine geforderte Mindest-Verfügbarkeit verbunden. Der Vergleicher 23 ist ausgangsseitig einerseits mit einer Freigabe-Komponente 22 der Prüfeinheit 2 und andererseits mit einer Korrektureinheit 3 verbunden. Die Freigabe-Komponente 22 ist dazu ausgestaltet und eingerichtet, daß bei Einhaltung einer vorgebbaren Mindest-Verfügbarkeit ohne oder durch Verwendung der zusätzlichen bzw. alternativen Netzkomponenten eine resultierende Netzkonfiguration für einen Betrieb freigegeben wird.

Die Korrektureinheit 3 ist dazu ausgestaltet und eingerichtet ist, daß bei Unterschreitung der vorgebbaren Mindest-Verfügbarkeit anhand des stochastischen Kommunikationsnetzmodells die Verfügbarkeit des Kommunikationsnetzes unter Verwendung erster zusätzlicher bzw. alternativer Netzkomponenten iterativ ermittelt wird. Hierzu ist die Korrektureinheit 3 ausgangsseitig mit der Komponente 12 zur Durchführung der Netzanalyse verbunden. Bei Unterschreitung der vorgebbaren Mindest-Verfügbarkeit trotz Verwendung der zusätzlichen bzw. alternativen Netzkomponenten wird die Verfügbarkeit des Kommunikationsnetzes unter Verwendung zweiter oder weiterer zusätzlicher bzw. alternativer Netzkomponenten erneut ermittelt.

Mittels des in der Figur dargestellten Systems kann also ein Verfahren zur Planung eines Kommunikationsnetzes durchgeführt werden, das eine Leitsystemebene mit einer Steuerungsgeräteebene eines industriellen Automatisierungssystems verbindet und nicht-zyklisch betrieben wird. Insbesondere kann das Kommunikationsnetz Ethernet-basiert sein. Eine Nachrichtenübermittlung innerhalb des Kommunikationsnetzes erfolgt beispielsweise entsprechend TCP/IP-Kommunikationsprotokoll.

Im Rahmen des Verfahrens zur Planung eines Kommunikationsnetzes wird das Kommunikationsnetz zunächst hinsichtlich einer wahrscheinlichen Übermittlungsdauer von Nachrichten innerhalb des Kommunikationsnetzes stochastisch modelliert wird. Anhand eines stochastischen Kommunikationsnetzmodells wird dann eine Verfügbarkeit des Kommunikationsnetzes überprüft. Bei Unterschreitung einer vorgebbaren Mindest-Verfügbarkeit wird anhand des stochastischen Kommunikationsnetzmodells die Verfügbarkeit des Kommunikationsnetzes unter Verwendung erster zusätzlicher bzw. alternativer Netzkomponenten iterativ ermittelt. Bei Unterschreitung der vorgebbaren Mindest-Verfügbarkeit trotz Verwendung der zusätzlichen bzw. alternativen Netzkomponenten wird die Verfügbarkeit des Kommunikationsnetzes unter Verwendung zweiter oder weiterer zusätzlicher bzw. alternativer Netzkomponenten erneut ermittelt. Bei Einhaltung der vorgebbaren Mindest-Verfügbarkeit wird eine überprüfte Netzkonfiguration für einen Betrieb freigegeben.

Das beschriebene Verfahren verbindet eine Modellierung von Kommunikationsverbindungen mit einer Verfügbarkeitsbetrachtung. Dieses Verfahren ist grundsätzlich für Kommunikationsnetze mit beliebiger Topologie anwendbar und erfordert keine speziellen Kommunikationsprotokolle.

Bei Fehlern, die in einem Kommunikationsnetz auftreten können, ist allgemein zwischen folgenden Arten zu unterscheiden
1. Übertragungsfehler, die durch physikalische Effekte bzw. Ausfälle von Netzknoten hervorgerufen werden,
2.Übertragungsfehler, die durch Topologieänderungen entstehen.

Erste Übertragungsfehler können aus empirischen Ausfallraten von Netzkomponenten abgeleitet werden und kennzeichnen diese hinsichtlich ihrer Zuverlässigkeit. Zweite Übertragungsfehler treten dagegen beim Routing in vermaschten Netzen auf. Dies gilt insbesondere dann, wenn Teilnehmer im Kommunikationsnetz dynamisch hinzugefügt werden. Gemeinsame Pfade im Kommunikationsnetz werden häufig von vielen Teilnehmern konkurrierend genutzt. Dies kann zu nicht-deterministischen Wartezeiten führen. In industriellen Automatisierungssystemen kann dadurch beispielsweise eine Übermittlung von Information über einen aktuellen Prozeßwert an einen Empfänger auf Leitsystemebene unvorhersagbar verzögert werden, so daß ein Empfang innerhalb einer erwarteten maximalen Zeit nicht mehr gewährleistet ist.

Zweite Übertragungsfehler können durch ein stochastisches Kommunikationsnetzmodell nachgebildet und damit einer quantifizierten Betrachtung zugeführt werden. Derartige Kommunikationsnetzmodelle liefern beispielsweise eine Aussage darüber, mit welcher Wahrscheinlichkeit eine bestimmte Reaktionszeit innerhalb eines Kommunikationsnetzes überschritten wird. Die Aussage eines solchen stochastischen Kommunikationsnetzmodells gibt bei zweiten Übertragungsfehlern eine zu erwartende Ausfallrate eines Kommunikationsnetzes wieder. Hierzu wird durch eine Benutzereingabe festgelegt, welche Reaktionszeit toleriert wird, und ab welchem Grenzwert ein unerwünschtes Systemverhalten vorliegt. Die Wahrscheinlichkeit von Reaktionszeiten über dem festgelegten Grenzwert repräsentiert dabei eine Ausfallrate des Kommunikationsnetzes. Somit sind erste Übertragungsfehler durch Aussagen über Ausfallraten von Netzkomponenten modellierbar, während zweite Übertragungsfehler anhand einer Ausfallrate des Kommunikationsnetzes in einem stochastischen Kommunikationsnetzmodell abbildbar sind.

Ergibt eine Analyse des Kommunikationsnetzmodells eine unzulässig niedrige Gesamtverfügbarkeit, werden an einer Benutzerschnittstelle vorzugsweise Hinweise dargestellt, durch welche Maßnahmen stochastische Eigenschaften des Kommunikationsnetzes verbessert werden können. Dies kann beispielsweise durch eine Verwendung anderer Netzkomponenten oder durch eine Verlegung paralleler Leitungen an kritischen Stellen innerhalb des Kommunikationsnetzes erzielt werden. Ein Netzplaner wird dabei vorteilhafterweise in einer iterativen Vorgehensweise unterstützt, bis die Gesamtverfügbarkeit des Kommunikationsnetzes in einem akzeptierten Rahmen liegt. Ein ähnliches Vorgehen ist auch bei einer nachträglichen Erweiterung eines Kommunikationsnetzes möglich. Werden zusätzliche Netzkomponenten in ein Kommunikationsnetz eingebracht, kann anhand einer Analyse des stochastischen Kommunikationsnetzmodells im Voraus geprüft werden, ob sich dies unzulässig negativ auf Reaktionszeiten innerhalb des Kommunikationsnetzes auswirken wird. Besteht dieses Problem nicht, kann die Erweiterung durchgeführt werden.

## Patentansprüche

1. Verfahren zur Planung eines Kommunikatsonsnetzes eines industriellen Automatisierungssystems, bei dem
- mittels einer Modellierungseinheit (1) Ausfallrate von Netzkomponenten erfasst werden,
- mittels der Modellierungseinheit (1) eine Netztopologie erfasst wird,
- anhand eines stochastischen Kommunikationsnetzmodells eine Verfügbarkeit des Kommunikationsnetzes überprüft wird,
- bei Unterschreitung einer vorgebbaren Mindest-Verfügbarkeit anhand des stochastischen Kommunikationsnetzmodells die Verfügbarkeit des Kommunikationsnetzes unter Verwendung erster zusätzlicher und/oder alternativer Netzkomponenten iterativ ermittelt wird,
- bei Unterschreitung der vorgebbaren Mindest-Verfügbarkeit trotz Verwendung der zusätzlichen und/oder alternativen Netzkomponenten die Verfügbarkeit des Kommunikationsnetzes unter Verwendung zweiter oder weiterer zusätzlicher und/oder alternativer Netzkomponenten erneut ermittelt wird,
- bei Einhaltung der vorgebbaren Mindest-Verfügbarkeit eine überprüfte Netzkonfiguration für einen Betrieb freigegeben wird
**dadurch gekennzeichnet, daß**
- das Kommunikationsnetz hinsichtlich einer wahrscheinlichen Übermittlungsdauer von Nachrichten innerhalb des Kommunikationsnetzes stochastisch modelliert wird, wobei aus dem resultierenden stochastischen Kommunikationsnetzmodell eine zu erwartende Ausfallrate des Kommunikationsnetzes ableitbar ist,
- für eine erfolgreiche Nachrichtenübermittlung innerhalb des Kommunikationsnetzes des industriellen Automatisierungssystems geforderte maximale Reaktionszeiten vorgegeben werden,
- das Kommunikationsnetzmodell Netzkomponenten hinsichtlich ihrer Ausfallrate und Kommunikationsverbindungen hinsichtlich einer Wahrscheinlichkeit einer erfolgreichen Nachrichtenübermittlung innerhalb der vorgegebenen maximalen Reaktionszeit abbildet.

2. Verfahren nach Anspruch 1,
bei dem das Kommunikationsnetz eine Leitsystemebene mit einer Steuerungsgeräteebene verbindet.

3. Verfahren nach einem der Ansprüche 1 bis 2,
bei dem das Kommunikationsnetz Ethernet-basiert ist.

4. Verfahren nach einem der Ansprüche 1 bis 3,
bei dem eine Nachrichtenübermittlung innerhalb des Kommunikationsnetzes entsprechend TCP/IP-Kommunikationsprotokoll erfolgt.

5. System zur Planung eines Kommunikationsnetzes eines industriellen Automatisierungssystems mit
- einer von einer Modellierungseinheit (1) umfassten Komponente (13) zur Erfassung von Ausfallraten von Netzkomponenten,
- die Modellierungseinheit (1) eine Komponente (11) zur Erfassung einer Netztopologie umfasst,
- einer Prüfeinheit zur Überprüfung einer Verfügbarkeit des Kommunikationsnetzes anhand eines stochastischen Kommunikationsnetzmodells,
- einer Korrektureinheit, die dazu ausgestaltet und eingerichtet ist, daß bei Unterschreitung einer vorgebbaren Mindest-Verfügbarkeit anhand des stochastischen Kommunikationsnetzmodells die Verfügbarkeit des Kommunikationsnetzes unter Verwendung erster zusätzlicher und/oder alternativer Netzkomponenten iterativ ermittelt wird,
- wobei die Korrektureinheit dazu ausgestaltet und eingerichtet ist, daß bei Unterschreitung der vorgebbaren Mindest-Verfügbarkeit trotz Verwendung der zusätzlichen und/oder alternativen Netzkomponenten die Verfügbarkeit des Kommunikationsnetzes unter Verwendung zweiter oder weiterer zusätzlicher und/oder alternativer Netzkomponenten erneut ermittelt wird,
- wobei die Prüfeinheit dazu ausgestaltet und eingerichtet ist, daß bei Einhaltung der vorgebbaren Mindest-Verfügbarkeit eine überprüfte Netzkonfiguration für einen Betrieb freigegeben wird,
**dadurch gekennzeichnet, daß**
- die Modellierungseinheit (1) zur stochastischen Modellierung des Kommunikationsnetzes hinsichtlich einer wahrscheinlichen Übermittlungsdauer von Nachrichten innerhalb des Kommunikationsnetzes ausgestaltet ist, wobei aus einem resultierenden stochastischen Kommunikationsnetzmodell eine zu erwartende Ausfallrate des Kommunikationsnetzes ableitbar ist,
- eine Komponente (12) zur Durchführung einer Netzanalyse mit einer Einheit (4) zur Vorgabe geforderter maximaler Reaktionszeiten für eine erfolgreiche Nachrichtenübermittlung innerhalb des Kommunikationsnetzes des industriellen Automatisierungssystems verbunden ist,
- das Kommunikationsnetzmodell Netzkomponenten hinsichtlich ihrer Ausfallrate und Kommunikationsverbindungen hinsichtlich einer Wahrscheinlichkeit einer erfolgreichen Nachrichtenübermittlung innerhalb der vorgegebenen maximalen Reaktionszeit abbildet.

6. System nach einem der Anspruch 5,
bei dem das Kommunikationsnetz eine Leitsystemebene mit einer Steuerungsgeräteebene verbindet.

7. System nach einem der Ansprüche 5 bis 6,
bei dem das Kommunikationsnetz Ethernet-basiert ist.

8. System nach einem der Ansprüche 5 bis 7,
bei dem eine Nachrichtenübermittlung innerhalb des Kommunikationsnetzes entsprechend TCP/IP-Kommunikationsprotokoll erfolge.

## Claims

1. Method for planning a communication network of an industrial automation system, in which
- failure rates of network components are captured using a modelling unit (1),
- a network topology is captured using the modelling unit (1),
- an availability of the communication network is checked on the basis of a stochastic communication network model,
- if a predefinable minimum availability is undershot, the availability of the communication network is iteratively determined on the basis of the stochastic communication network model using first additional and/or alternative network components,
- if the predefinable minimum availability is undershot despite using the additional and/or alternative network components, the availability of the communication network is determined again using second or further additional and/or alternative network components,
- if the predefinable minimum availability is complied with, a checked network configuration is released for operation,
**characterized in that**
- the communication network is stochastically modelled with respect to a probable transmission duration of messages inside the communication network, an expected failure rate of the communication network being able to be derived from the resulting stochastic communication network model,
- required maximum response times are predefined for successful message transmission inside the communication network of the industrial automation system,
- the communication network model represents network components with regard to their failure rate and communication connections with regard to a probability of successful message transmission within the predefined maximum response time.

2. Method according to Claim 1,
in which the communication network connects a control system level to a control device level.

3. Method according to either of Claims 1 and 2,
in which the communication network is Ethernet-based.

4. Method according to one of Claims 1 to 3,
in which messages are transmitted inside the communication network in accordance with the TCP/IP communication protocol.

5. System for planning a communication network of an industrial automation system, having
- a component (13) which is included in a modelling unit (1) and is intended to capture failure rates of network components,
- the modelling unit (1) comprising a component (11) for capturing a network topology,
- a checking unit for checking an availability of the communication network on the basis of a stochastic communication network model,
- a correction unit which is configured and set up such that, if a predefinable minimum availability is undershot, the availability of the communication network is iteratively determined on the basis of the stochastic communication network model using first additional and/or alternative network components,
- the correction unit being configured and set up such that, if the predefinable minimum availability is undershot despite using the additional and/or alternative network components, the availability of the communication network is determined again using second or further additional and/or alternative network components,
- the checking unit being configured and set up such that, if the predefinable minimum availability is complied with, a checked network configuration is released for operation,
**characterized in that**
- the modelling unit (1) is configured to stochastically model the communication network with regard to a probable transmission duration of messages inside the communication network, an expected failure rate of the communication network being able to be derived from a resulting stochastic communication network model,
- a component (12) for carrying out a network analysis is connected to a unit (4) for predefining required maximum response times for successful message transmission inside the communication network of the industrial automation system,
- the communication network model represents network components with regard to their failure rate and communication connections with regard to a probability of successful message transmission within the predefined maximum response time.

6. System according to Claim 5,
in which the communication network connects a control system level to a control device level.

7. System according to either of Claims 5 and 6,
in which the communication network is Ethernet-based.

8. System according to one of Claims 5 to 7,
in which messages are transmitted inside the communication network in accordance with the TCP/IP communication protocol.

## Revendications

1. Procédé de conception d'un réseau de communication d'un système d'automatisation industrielle, dans lequel
- au moyen d'une unité ( 1 ) de modélisation, on détecte des taux de défaillance de composants du réseau,
- au moyen de l'unité ( 1 ) de modélisation, on détecte une topologie du réseau,
- au moyen d'un modèle stochastique du réseau de communication, on contrôle une disponibilité du réseau de communication,
- si l'on passe en dessous d'une disponibilité minimum, pouvant être donnée à l'avance, on détermine par itération, à l'aide du modèle stochastique du réseau de communication, la disponibilité du réseau de communication, en utilisant un premier composant supplémentaire du réseau et/ou un composant alternatif du réseau,
- si la disponibilité minimum, pouvant être donnée à l'avance, est respectée, on permet un fonctionnement d'une configuration contrôlée du réseau,
**caractérisé en ce que**
- on modélise stochastiquement le réseau de communication du point de vue d'une durée de transmission probable de messages dans le réseau de communication, un taux de défaillance escompté du réseau de communication pouvant être déduit du modèle stochastique résultant du réseau de communication,
- on prescrit des temps de réaction maximum, exigés pour une transmission de messages couronnée de succès, dans le réseau de communication du système d'automatisation industrielle,
- le module du réseau de communication représente des composants du réseau, en ce qui concerne leur taux de défaillance et des liaisons de communication, en ce qui concerne une probabilité d'une transmission de messages couronnée de succès, dans un temps de réaction maximum donné à l'avance.

2. Procédé suivant la revendication 1,
dans lequel le réseau de communication relie un plan de système de gestion à un plan d'appareils de commande.

3. Procédé suivant l'une des revendications 1 à 2,
dans lequel le réseau de communication repose sur l'Ethernet.

4. Procédé suivant l'une des revendications 1 à 3,
dans lequel une transmission de messages dans le réseau de communication s'effectue conformément au protocole de communication TCP/IP.

5. Système de conception d'un réseau de communication d'un système d'automatisation industrielle, comprenant
- un composant ( 13 ) englobé dans une unité ( 1 ) de modélisation, pour détecter des taux de défaillance de composants du réseau,
- l'unité ( 1 ) de modélisation comprend un composant ( 11 ) de détection d'une topologie du réseau,
- une unité de contrôle, pour contrôler une disponibilité du réseau de communication à l'aide d'un modèle stochastique du réseau de communication,
- une unité de correction conformée et conçue pour, si l'on passe en dessous d'une disponibilité minimum pouvant être donnée à l'avance, déterminer par itération, à l'aide du modèle stochastique du réseau de communication, la disponibilité du réseau de communication, en utilisant un premier composant supplémentaire du réseau et/ou un composant alternatif du réseau,
- l'unité de correction étant conformée et conçue pour, si l'on passe en dessous de la disponibilité minimum pouvant être donnée à l'avance, en dépit de l'utilisation du composant de réseau supplémentaire et/ou alternatif, déterminer à nouveau la disponibilité du réseau de communication, en utilisant un deuxième ou un autre composant supplémentaire et/ou alternatif du réseau, l'unité de contrôle étant conformée et conçue pour permettre une configuration contrôlée du réseau, si la disponibilité minimum pouvant être donnée à l'avance est respectée,
**caractérisé en ce que**
- l'unité ( 1 ) de modélisation est constituée pour la modélisation stochastique du réseau de communication, en ce qui concerne une durée probable de transmission de messages dans le réseau de communication, un taux de défaillance escompté du réseau de communication pouvant être déduit d'un modèle stochastique résultant du réseau de communication,
- un composant ( 12 ) pour effectuer une analyse du réseau étant relié à une unité ( 4 ) de prescription de temps de réaction maximum exigé, pour une transmission de messages couronnée de succès dans le réseau de communication du système d'automatisation industrielle,
- le modèle du réseau de communication, représentant des composants du réseau, en ce qui concerne leur taux de défaillance et des liaisons de communication, en ce qui concerne une probabilité d'une transmission de messages couronnée de succès dans le temps de réaction maximum donné à l'avance.

6. Système suivant la revendication 5,
dans lequel le réseau de communication relie un plan de système de gestion à un plan d'appareils de commande.

7. Système suivant l'une des revendications 5 à 6,
dans lequel le réseau de communication repose sur l'Ethernet.

8. Système suivant l'une des revendications 5 à 7,
dans lequel une transmission de messages dans le réseau de communication s'effectue conformément au protocole de communication TCP/IP.
